Europäisches Patentamt

European Patent Office

Office européen des brevets

(11) Veröffentlichungsnummer: **0 440 968 A1**

## (12) EUROPÄISCHE PATENTANMELDUNG

(21) Anmeldenummer: 90125176.9

(22) Anmeldetag: **21.12.90**

(51) Int. Cl.5: **H01M 8/24, H01M 8/02**

(30) Priorität: **08.02.90 CH 405/90**

(43) Veröffentlichungstag der Anmeldung:
**14.08.91 Patentblatt 91/33**

(84) Benannte Vertragsstaaten:
**CH DE FR GB IT LI NL SE**

(71) Anmelder: **ASEA BROWN BOVERI AG**

**CH-5401 Baden(CH)**

(72) Erfinder: **Bossel, Ulf, Dr.**
**Baldeggstrasse 13**
**CH-5400 Baden(CH)**
Erfinder: **Ferguson, James R.**
**Flurstrasse 1**
**CH-5415 Nussbaumen(CH)**
Erfinder: **Lüthi, Hans K.**
**Kapellmatte**
**CH-5610 Wohlen(CH)**

(54) **Vorrichtung zur Erzielung einer möglichst gleichmässigen Temperaturverteilung auf der Oberfläche einer plattenförmigen keramischen Hochtemperatur-Brennstoffzelle.**

(57) Vorrichtung zur Erziehlung möglichst gleichmässiger Temperaturverteilung auf der Oberfläche einer Brennstoffzelle (1; 2; 3) durch Steuerung der die Zelle beaufschlagenden Ströme gasförmiger Medien ($O_2$; $CH_4$) mittels eines zwischen einer Elektrode (2; 3) und der separierenden Trennplatte (4) angeordneten Verteilelements (5; 9), welches dafür sorgt, dass die gesamte Elektrodenoberfläche (2; 3) mit zugeführten Teilströmen (7; 11) der gasförmigen Medien ($O_2$; $CH_4$) möglichst gleicher Temperatur beaufschlagt ist. Sonderausführung mit Verteilelement, Trennplatte und Stromkollektor aus einem einzigen Blech.

## FIG.1

EP 0 440 968 A1

## VORRICHTUNG ZUR ERZIELUNG EINER MÖGLICHST GLEICHMÄSSIGEN TEMPERATURVERTEILUNG AUF DER OBERFLÄCHE EINER PLATTENFÖRMIGEN KERAMISCHEN HOCHTEMPERATUR-BRENNSTOFFZELLE

Technisches Gebiet

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Im engerem Sinne betrifft die Erfindung eine Vorrichtung zur Erzielung einer möglichst gleichmässigen Temperaturverteilung auf der Oberfläche einer plattenförmigen keramischen Hochtemperatur-Brennstoffzelle durch mindestens einseitige Steuerung der die Brennstoffzelle auf beiden Seiten beaufschlagenden Ströme gasförmiger Medien ($O_2$; $CH_4$).

Stand der Technik

Hochtemperatur-Brennstoffzellen mit keramischen Feststoffelektrolyten sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten.

Im Falle einer stapelförmigen Anordnung einer Vielzahl von plattenförmigen ebenen Brennstoffzellen ähnlich dem Filterpresse-Prinzip muss der Strom senkrecht zur Plattenebene von der Sauerstoffelektrode der einen Zelle zur Brennstoffelektrode der nächstfolgenden Zelle geleitet werden.Als wesentliche Bauelemente sind für diese Funktion elektrische Verbindungsglieder zu den Elektroden (Stromkollektoren) und Trennplatten (Bipolarplatten) erforderlich.

Die bisher bekannten Bauelemente, Anordnungen und Gasführungen befriedigen vielfach bezüglich der verwendenten Werkstoffe, der Konstruktion und Fabrikation sowie dem Langzeitverhalten den modernen Anforderungen nicht.

Ferner müssen die Ströme der den Brennstoffzellen zuzuführenden gasförmigen Medien (Symbol $O_2$ für Sauerstoffträger, z.B. Luft; Symbol $CH_4$ für gasförmigen Brennstoff in Form eines Kohlenwasserstoffs, z.B.Methan) derart geleitet und gesteuert werden, dass die Elektrodenoberfläche eine möglichst konstante Temperatur annimmt.

Aus der Lüftungstechnik sind zur Steuerung und Leitung von Gasströmen im Prinzip Schikanen aller Art in Form von Leit- und Umlenkblechen, Blenden etc. bekannt. Diese Bauelemente werden vor allem in der Raumbelüftung, im Air-conditioning etc. verwendet. Das Ziel besteht u.a. darin, über längere Distanzen konstante Temperaturen anzustreben.

Bei konventionell geführten Strömen der gasförmigen Medien in aus mehreren Einheiten bestehenden Brennstoffzellen-Anordnungen ist - unabhängig von der Art der Anordnung - im allgemeinen die Temperatur am Eintritt zu niedrig, am Austritt dagegen zu hoch. Dies gilt für alle bekannten Einheiten und Anordnungen: Ausführungen in Form von Röhren, Waben, Wellen oder Platten.

Die bekannten, für Brennstoffzellen und deren Anordnungen in grösseren Verbänden verwendeten Grundelemente zeichnen sich meistens durch eine vergleichsweise komplizierte Geometrie aus, die den Bau von kompakten, raumsparenden Anlagen erschwert. Insbesondere fehlt eine für eine optimale Serieschaltung und Beaufschlagung der Einzelzellen mit gasförmigen Medien brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von stromführenden Grund-Bauelementen und deren optimale konstruktive und fabrikationsgerechte Gestaltung.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21 - 30,
- US-A-4 692 274
- US-A-4 395 468

- W.J. Dollard und W.G. Parker, "An overview of the Westinghouse Electric Corporation solid oxide Fuel cell program", Extended Abstracts, Fuel Cell Technology and Applications, International Seminar, Den Haag, Niederlande, 26. bis 29. Oktober 1987,
- F J.Rohr, High-Temperature Fuel Cells, Solid Electrolytes, 1987 by Academic Press, Inc. Seite 431 ff.
- D.C.Fee et. al., Monolithic Fuel Cell Development, Argonne National Laboratory, Paper presented at the 1986 Fuel Cell Seminar, Oct. 26-29, 1989 Tucson, AZ, U.S. Department of Energy.

Darstellung der Erfindung:

Der Erfindung liegt die Aufgabe zugrunde, eine Vorrichtung zur Erzielung einer möglichst gleichmässigen Temperaturverteilung auf der Oberfläche einer plattenförmigen keramischen Hochtemperatur-Brennstoffzelle durch mindestens einseitige Steuerung der die Brennstoffzelle auf beiden Seiten beaufschlagenden Ströme gasförmiger Medien ($O_2$; $CH_4$) anzugeben, die sich auf einfache Weise in einen Stapel von Brennstoffzellen einbauen lässt. Die Vorrichtung soll sich insbesondere für die nach dem Filterpresse-Prinzip angeordneten Brennstoffzellen eignen und die Möglichkeit bieten, sich mit anderen Bauelementen, wie Stromkollektoren, Trennplatten etc. zu einheitlichen Bauteilen integrieren zu lassen.

Diese Aufgabe wird dadurch gelöst, dass in der eingangs erwähnten Vorrrichtung mindestens auf einer Seite zwischen einer der Elektroden und der die Räume der gasförmigen Medien ($O_2$; $CH_4$) separierenden Trennplatte ein Verteilelement angeordnet ist, dergestalt, dass die gesamte Elektrodenoberfläche mit zugeführtem strömendem Medium ($O_2$; $CH_4$) möglichst gleicher Temperatur beaufschlagt ist.

Weg zur Ausführung der Erfindung:

Die Erfindung wird anhand der durch Figuren näher erläuterten Ausführungsbeispiele beschrieben.

Dabei zeigt:

Fig.1   einen Aufriss/Schnitt durch eine Brennstoffzellenanordnung mit Trennplatte und beidseitig vorgesehenen Verteilelementen in Form von mit Oeffnungen versehenen Platten,

Fig.2   einen Aufriss/Schnitt durch eine Brennstoffzellenanordnung mit Trennplatte und beidseitig vorgesehenen Verteilelementen in Form von Keilen aus gasdurchlässigem Werkstoff,

Fig.3   einen Aufriss/Schnitt durch eine Brennstoffzellenanordnung mit Trennplatte und beidseitig vorgesehenen plattenförmigen Verteilelementen und mit diesen fest verbundenen Stromkollektoren in Form von Kontaktfingern,

Fig.4   einen vergrösserten Aufriss/Schnitt durch eine Brennstoffzellenanordnung mit Trennplatte und plattenförmigen Verteilelementen und Stromkollektoren in Form von Kontaktfingern,

Fig.5   einen Aufriss/Schnitt durch eine Brennstoffzellenanordnung mit Trennplatte und beidseitig vorgesehenen keilförmigen Verteilelementen und unabhängigen wellen- und wendelförmigen Stromkollektoren,

Fig.6   einen Aufriss/Schnitt durch eine Brennstoffzellenanordnung mit einem als Trennplatte und als Stromkollektoren ausgebildeten plattenförmigen monolithischen Verteilelement,

Fig.7   einen Grundriss eines Bleches für die Herstellung eines als Trennplatte und Stromkollektoren dienenden Verteilelements für Gegenstrom von $O_2$ und $CH_4$,

Fig.8   einen Grundriss eines Bleches für die Herstellung eines als Trennplatte und Stromkollektor dienenden Verteilelements für Kreuzstrom von $O_2$ und $CH_4$.

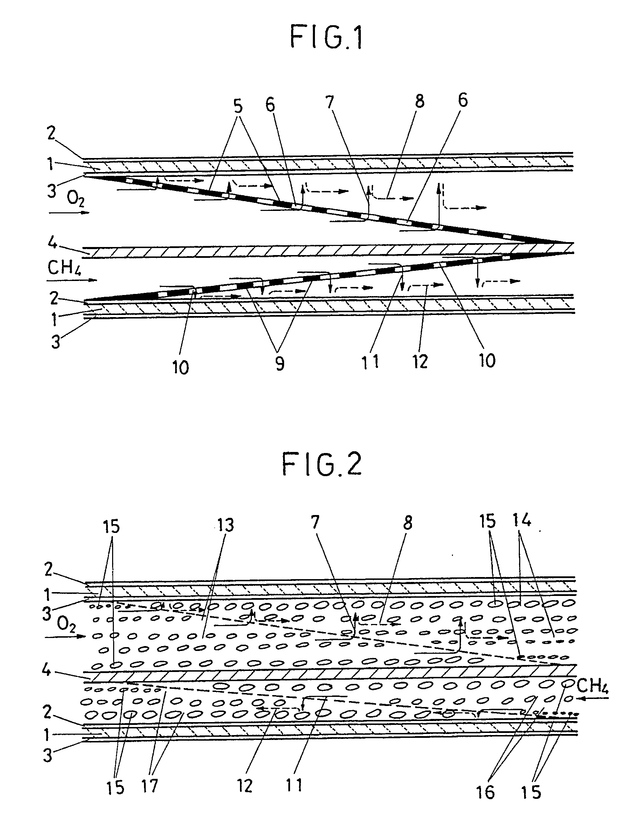

Fig.1 zeigt einen Aufriss/Schnitt durch eine Brennstoffzellenanordnung mit Trennplatte und beidseitig vorgesehenen Verteilelementen in Form von mit Oeffnungen versehenen Platten. Die eigentliche Brennstoffzelle besteht aus dem keramischen Feststoffelektrolyten 1, normalerweise aus dotiertem, stabilisiertem Zr $O_2$, der porösen negativen Brennstoffelektrode 2 (Ni/$ZrO_2$ - Cermet) und der porösen positiven Sauerstoffelektrode 3 (La/Mn-Perowskit).4 ist eine gasdichte, elektrisch leitende Trennplatte, welche die beiden gasförmigen Medien Sauerstoffträger (Symbol $O_2$ ;meistens Luft) und Brennstoff (Symbol $CH_4$ ;im vorliegenden Fall Methan) von einander trennt. 5 ist eine schräg verlaufende Platte als Verteilelement auf der Sauerstoffseite. Die Platte 5 weist Oeffnungen 6 auf, welche in Strömungsrichtung gesehen unterschiedliche Grösse aufweisen. Im allgemeinen wächst der Oeffnungsquerschnitt gegen die Mitte der Platte zu und nimmt gegen das Ende wieder ab. Dadurch werden die Teilströme 7 des gasförmigen Sauerstoffträgers ($O_2$) zunächst fortschreitend grösser, dann gegen das Ende der Platte 5 hin wieder kleiner. 8 stellt je einen Teilstrom des Abgases auf der Sauerstoffseite dar. 9 ist eine schräg verlaufende Platte als Verteilelement auf der Brennstoffseite. Die Platte 9 weist Oeffnungen 10 auf, welche in Strömungsrichtung gesehen zunächst progressiv grösser, dann wieder kleiner bemessen sind. 11 ist je ein Teilstrom des gasförmigen Brennstoffs ($CH_4$ ), während 12 je einen Teilstrom des Abgases auf der Brennstoffseite darstellt. Die

3

Strömungsverhältnisse auf der Brennstoffseite sind somit analog zu jenen auf der Sauerstoffseite. Die Strömungsrichtung des gasförmigen Brennstoffs ($CH_4$ )ist hier gleichsinnig zu derjenigen des gasförmigen Sauerstoffträgers ($O_2$):Gleichstromprinzip!

In Fig.2 ist ein Aufriss/Schnitt durch eine Brennstoffzellenanordnung mit Trennplatte und beidseitig vorgesehenen Verteilelementen in Form von Keilen aus gasdurchlässigem Werkstoff dargestellt. Die Bezugszeichen 1,2,3,4 entsprechen genau denjenigen der Fig.1. Die Brennsstoffzellen bestehen aus den Elementen 1,2,3; die Trennplatte 4 dient wieder zur Trennung der Gasströme (Symbole $O_2$ und $CH_4$ ). Desgleichen sind 7 und 11 die Teilströme der ankommenden, zugeführten gasförmigen Medien und 8 und 12 diejenigen der entsprechenden Abgase. 13 ist ein gasdurchlässiger Keil als Verteilelement am Eintritt auf der Sauerstoffseite. 14 ist ein entsprechender Keil am Austritt auf der Sauerstoffseite. Die mit offenen Poren 15 versehenen, vorzugsweise aus einem leichten keramischen Werkstoff bestehenden Keile 13 und 14 weisen senkrecht zur Plattenebene gesehen unterschiedlichen Strömungswiderstand auf. Dies ist in der Zeichnung durch verschieden grosse Poren angedeutet. Auf der Eintrittsseite nimmt die Porengrösse des Keils 13 von der Sauerstoffelektrode 3 zur Trennplatte hin zu, der Strömungswiderstand demzufolge ab. Umgekehrt nimmt auf der Austrittseite die Porengrösse des Keils 14 von der Sauerstoffelektrode 3 zur Trennplatte hin ab, der Strömungswiderstand demzufolge zu. Durch das Zusammenwirken der Keile 13 und 14 werden die Teilströme 7 derart gesteuert, dass die Temperaturverteilung an der Sauerstoffelektrode 3 eine möglichst gleichmässige ist. Auf der Brennstoffseite herrschen analoge Verhältnisse für den Keil 16 als Verteilelement am Eintritt und den Keil 17 als Verteilelement am Austritt. Die Strömungsrichtung des gasförmigen Brennstoffs ($CH_4$) ist hier gerade entgegengesetzt derjenigen des gasförmigen Sauerstoffsträgers ($O_2$):Gegenstromprinzip!

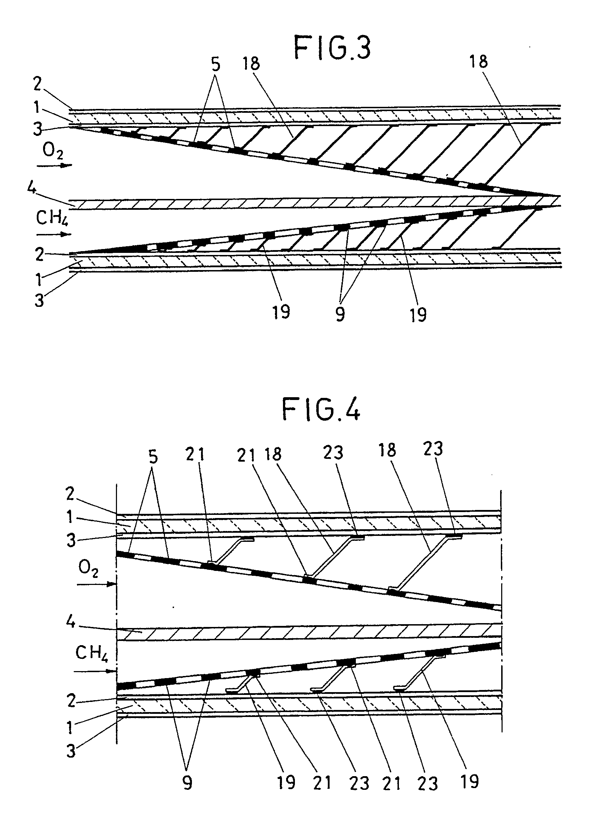

In Fig.3 ist ein Aufriss/Schnitt durch eine Brennstoffzellenanordnung mit Trennplatte und beidseitig vorgesehenen plattenförmigen Verteilelementen und mit diesen fest verbundenen Stromkollektoren in Form von Kontaktfingern dargestellt. 1 ist der Feststoffelektrolyt, 2 die Brennstoffelektrode, 3 die Sauerstoffelektrode. 4 ist die Trennplatte zur Separierung der strömenden gasförmigen Medien ($O_2$; $CH_4$). .Auf den mit Oeffnungen versehenen schräg verlaufenden Platten 5 (Sauerstoffseite) und 9 (Brennstoffseite) als Verteilelemente sind Stromkollektoren 18 (Sauerstoffseite) und 19 (Brennstoffseite) in Form von Kontaktfingern elektrisch leitend befestigt. Diese Befestigung wird durch eine örtliche Schweissung (Punktschweissung) oder Hochtemperatur-Lötung (Lötpunkt) gewährleistet. Die als Kontaktfinger ausgebildeten Stromkollektoren 18 und 19 bestehen aus einem warmfesten, bei 900° C noch genügende Federeigenschaften aufweisenden Werkstoff. Die Stromkollektoren 18 auf der Sauerstoffseite müssen zudem noch oxydationsbeständig oder bei Betriebstemperatur nichtoxydierbar sein.

Fig.4 bezieht sich auf einen vergrösserten Aufriss/Schnitt durch eine Brennstoffzellenanordnung mit Trennplatte und plattenförmigen Verteilelementen und Stromkollektoren in Form von Kontaktfingern. Die Bezugszeichen 1,2,3 (Brennstoffzelle) sowie 4 (Trennplatte) entsprechen genau denjenigen der Fig.3. 5 ist die als Verteilelement dienende, mit Oeffnungen versehene, schräg verlaufende Platte auf der Sauerstoffseite, auf welcher die Stromkollektoren 18 in Form von Kontaktfingern mittels Schweisspunkten 21 befestigt sind. Die Kontaktfinger der Stromkollektoren 18 sind auf der der Elektrode 3 zugewandten Seite mit je einer Edelmetallauflage 23 (Kontaktpunkt) versehen. Analoges gilt für die Brennstoffseite. Die Platte 9 weist die mit Schweisspunkten 21 befestigten Stromkollektoren 19 in Form von Kontaktfingern auf, welche ihrerseits auf der der Elektrode 2 zugewandten Seite Edelmetallauflagen 23 (Kontaktpunkte) aufweisen. Alles übrige geht aus Fig.3 hervor.

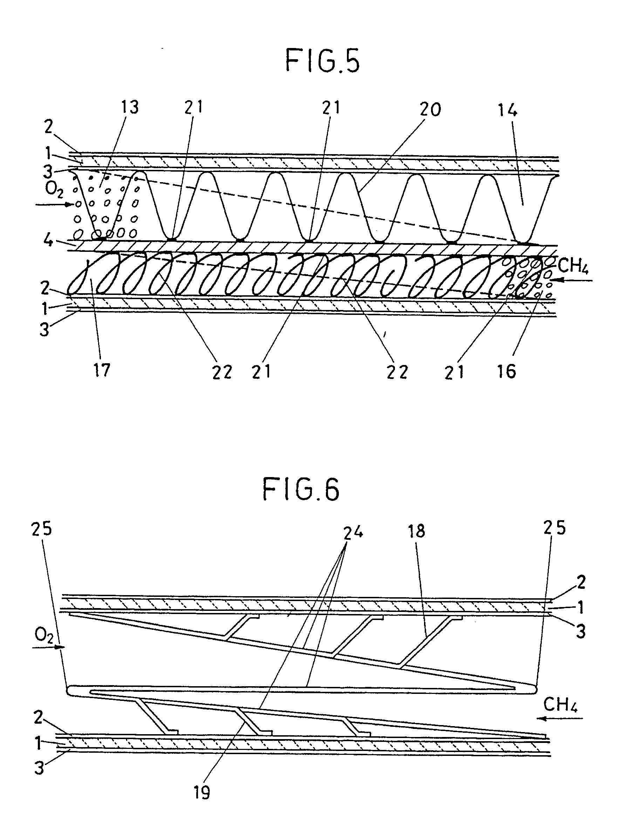

Fig.5 stellt einen Aufriss/Schnitt durch eine Brennsotffzellenanordnung mit Trennplatte und beidseitig vorgesehenen keilförmigen Verteilelementen und unabhängigen wellen- und wendelförmigen Stromkollektoren dar. 1 ist der Feststoffelektrolyt , 2 die Brennstoffelektrode, 3 die Sauerstoffelektrode. 4 ist die Trennplatte zur Separierung der gasförmigen Medien ($O_2$; $CH_4$). Die als Verteilelemente dienenden gasdurchlässigen Keile 13 und 14 auf der Sauerstoffseite werden durch einen Stromkollektor 20 in Form eines wellenförmigen Bandes durchbrochen. Die die Trennplatte 4 berührenden Scheitelpunkte der Sinuswellen des Stromkollektors 20 sind mit letzterer durch Schweisspunkte 21 kraftschlüssig und elektrisch leitend verbunden, während sich die die Elektrode 3 berührenden Scheitelpunkte elastisch frei bewegen können. Auf der Brennstoffseite befinden sich die gasdurchlässigen Keile 16 und 17 als Verteilelemente, die ihrerseits durch einen Stromkollektor 22 in Form von schiefen Drahtwendeln durchbrochen werden. Die die Trennplatte 4 berührenden Scheitel der Drahtwendel sind mit letzterer durch Schweisspunkte 21 fest verbunden. Die die Elektrode 2 berührenden Scheitel des Stromkollektors 22 können sich frei bewegen. Um die Beweglichkeit der Stromkollektoren an ihren Berührungspunkten zu den Elektroden 2 und 3 zu gewährleisten, sind in den Keilen 13,14,16,17 entsprechende lokale Aussparungen vorgesehen (in der Figur der Uebersichtlichkeit halber nicht eingezeichnet).

Fig.6 zeigt einen Aufriss/Schnitt durch eine Brennstoffzellenanordnung mit einem als Trennplatte und als Stromkollektoren ausgebildeten plattenförmigen monolithischen Verteilelement. Die Bezugszeichen für die Brennstoffzelle 1,2,3 entsprechen genau denjenigen der Fig.1. 24 stellt einen monolithischen Blechkörper nach der Formgebung dar. 25 sind die Faltzonen dieses Blechkörpers 24. Die schräg verlaufenden Partien dienen als Verteilelemente, aus denen die Stromkollektoren 18 und 19 in Form von gestanzten und in entsprechende Form gebogenen Kontaktfingern herausragen. Die Strömungsrichtungen der gasförmigen Medien sind durch Pfeile ($O_2$; $CH_4$) angedeutet: Gegenstromprinzip!

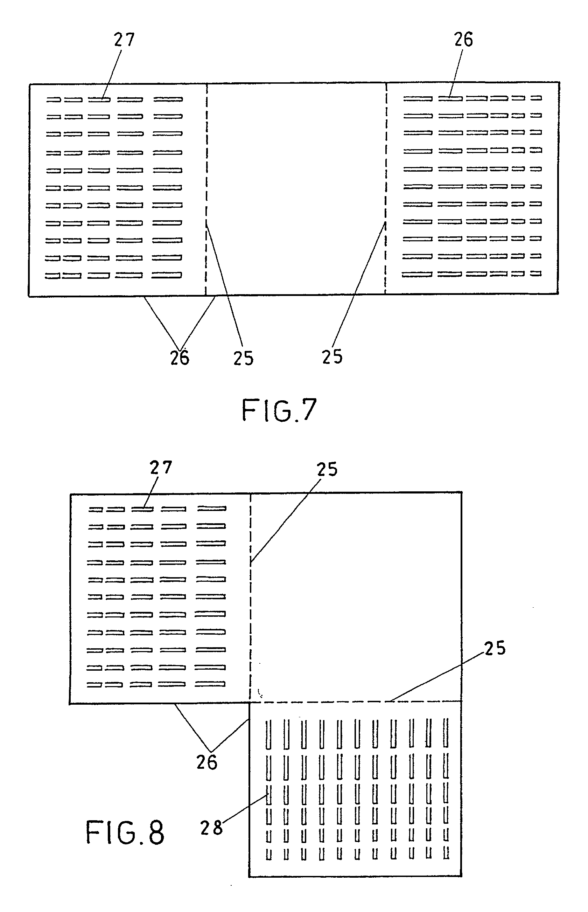

In Fig.7 ist ein Grundriss eines Bleches für die Herstellung eines als Trennplatte und Stromkollektor dienenden Verteilelements für Gegenstrom von $O_2$ und $CH_4$ dargestellt. 26 ist der monolithische Blechkörper vor dem Falten. 25 sind die Faltzonen des Blechkörpers. 27 stellen die gestanzten Lamellen im Blechkörper auf der Sauerstoffseite dar. 28 sind die entsprechenden gestanzten Lamellen auf der Brennstoffseite. Im vorliegenden Fall haben die Lamellen 27 und 28 rechteckige Form. Grundsätzlich können auch andere Formen (Trapez, Dreieck) für diese Lamellen oder Lappen ausgeführt werden. Im vorliegenden Fall (Gegenstromprinzip) liegen die Längsrichtungen der Lamellen 27 und 28 auf Parallelen.

In Fig.8 ist ein Grundriss eines Bleches für die Herstellung eines als Trennplatte und Stromkollektor dienenden Verteilelements für Kreuzstrom von $O_2$ und $CH_4$ dargestellt. Die Bezugszeichen 25,26,27 und 28 haben die gleiche Bedeutung wie in Fig. 7. Die Längsrichtungen der Lamellen 28 bilden hier mit denjenigen der Lamellen 27 einen rechten Winkel (Kreuzstromprinzip). Im übrigen gelten die unter Fig.7 gemachten Erläuterungen. Die Faltzonen 25 stehen ebenfalls senkrecht aufeinander. Selbstverständlich sind auch andere, von 90° abweichende Winkel und vom rechteckigen Grundriss abweichende Blechkörper (Projektion der Brennstoffzelle) ausführbar.

Ausführungsbeispiel 1:

Siehe Fig 1!

Die Brennstoffzellen bestanden aus ebenen quadratischen Platten von 100 mm Seitenlänge. Der Feststoffelektrolyt 1 war mit $Y_2 O_3$ dotiertes, stabilisiertes $ZrO_2$. Die Brennstoffelektrode 2 bestand aus $Ni/ZrO_2$-Cermet, während die Sauerstoffelektrode 3 aus einem mit SrO dotierten La/Mn-Perowskit gefertigt war. Zwischen zwei benachbarten Brennstoffzellen war eine Trennplatte 4 von 0,6 mm Dicke aus einem hitzebeständigen Cr/Al-Stahl angeordnet. Der Werkstoff hatte die Stoffnummer 1.4742 der Deutschen Norm (DIN X10Cr Al 18) von Thyssen mit nachfolgender Zusammensetzung:

| | | | |
|-----|-----|------|---------|
| Cr | = | 18 | Gew.-% |
| Al | = | 1 | Gew.-% |
| Si | = | 0,8 | Gew.-% |
| Mn | = | 0,7 | Gew.-% |
| C | ≤ | 0,12 | Gew.-% |
| P | ≤ | 0,04 | Gew.-% |
| S | ≤ | 0,03 | Gew.-% |
| Fe | = | Rest | |

Für die Sauerstoffseite wurde eine schräg verlaufende Platte 5 als Verteilelement vorgesehen. Die Platte bestand aus einem Blech von 100 mm x 100 mm x 0,35 mm und war mit Oeffnungen 6 versehen. Letztere hatten die Form von rechteckigen Schlitzen von 2mm Breite und progressiv von 2 mm auf 8 mm zunehmender und wieder auf 2 mm abnehmender variabler Länge. Die Teilung der Schlitze in Querrichtung betrug 2,5 mm, diejenige in Längsrichtung 10 mm. Als Werkstoff wurde eine Nickelbasislegierung mit dem Handelsnamen Nimonic 80A mit folgender Zusammensetzung gewählt:

```
Cr   =    19,5   Gew.-%
Al   =     1,4   Gew.-%
Ti   =     2,4   Gew.-%


Zr   =    0,06   Gew.-%
Mn   =    0,30   Gew.-%
Si   =    0,30   Gew.-%
B    =    0,003  Gew.-%
C    =    0,006  Gew.-%
Ni   =    Rest
```

Für die Brennstoffseite wurde eine schräg verlaufende Platte 9 als Verteilelement verwendet. Die Platte hatte die Abmessungen 100 mm x 100 mm x 0,3 mm und war mit Oeffnungen 10 versehen. Die Abmessungen und Formen dieser Oeffnungen 10 (Schlitze) waren die gleichen wie auf der Sauerstoffseite (Oeffnung 6). Als Werkstoff wurde eine Legierung mit dem Handelsnamen Inconel mit der nachfolgenden Zusammensetzung verwendet:

```
Cr   =    14   Gew.-%
Fe   =     6   Gew.-%
Ni   =    80   Gew.-%
```

Ausführungsbeispiel 2:

Siehe Fig.2 !

Die Brennstoffzellenanordnung war ähnlich derjenigen von Beispiel 1. Die als Brennstoffzellen (1; 2; 3) dienenden quadratischen Platten hatten 120 mm Seitenlänge . Die Trennplatte 4 wies eine Dicke von 0,45 mm auf und bestand aus einer warmfesten Nickellegierung mit dem Handelsnamen Inconel X mit folgender Zusammensetzung:

```
Cr   =    15,0   Gew.-%
Ti   =     2,5   Gew.-%
Al   =     0,7   Gew.-%
Nb   =     1,0   Gew.-%
Fe   =     7,0   Gew.-%
Si   =     0,3   Gew.-%
Mn   =     0,4   Gew.-%
C    =    0,04   Gew.-%
Ni   =    Rest
```

Sowohl auf der Sauerstoffseite wie auf der Brennstoffseite waren gasdurchlässige Keile 13, 14 und 16, 17 mit offenen Poren aus dem keramischen Werkstoff Schamotte vorgesehen. Es handelte sich um eine Art sehr leichten grobporigen Schaumstoffs mit in der Querrichtung variablem Porenvolumen und somit variabler Gasdurchlässigkeit. Das Raumgewicht der hochporösen Schaummasse variierte zwischen 0,05 und 0,1 kg/dm³ .Die Poren hatten im Minimum ca. 0,7 mm, im Maximum ca.3 mm Durchmesser (Kanaldurchmesser). Die Keile 13 und 14 (120 mm x 120 mm x 10 mm) sowie 16 und 17 (120 mm x 120 mm x 6 mm) wurden geschliffen und genau zusammengefügt. Auf der Sauerstoffseite (Medium Luft) betrug die Höhe der Keile 13 und 14 total 15 mm, auf der Brennstoffseite (Medium Methan) diejenige der Keile 16 und 17 total 8 mm.

Ausführungsbeispiel 3:

Siehe Fig.3 und 4 !

Als Brennstoffzellen (1; 2; 3) dienten ebene quadratische Platten von 125 mm Seitenlänge. Die Trennplatte 4 hatte eine Dicke von 0,5 mm und bestand aus einer Ni/Cr - Heiz-leiterlegierung mit der Stoffnummer 2.4869 der Deutschen Norm (DIN NiCr 80 20) von Thyssen mit der folgenden Zusammensetzung:

| | | | |
|----|----|-------|---------|
| Ni | = | 76 | Gew.-% |
| Cr | = | 20 | Gew.-% |
| Cu | = | 0,5 | Gew.-% |
| Si | = | 0,9 | Gew.-% |
| Mn | ≤ | 0,8 | Gew.-% |
| C | ≤ | 0,15 | Gew.-% |
| P | ≤ | 0,025 | Gew.-% |
| S | = | 0,02 | Gew.-% |
| Fe | = | Rest | |

Auf der Sauerstoffseite wurde eine schräg verlaufende Platte 5 als Verteilelement vorgesehen. Die Platte bestand aus einem Blech von 125 mm x 125 mm x 0,28 mm und war mit Oeffnungen in Form von rechteckigen Schlitzen versehen. Die Schlitze hatten eine Breite von 2 mm und eine progressive variable Länge von minimal 1,5 mm, maximal 7 mm. Die seitliche Teilung betrug 2,4 mm, diejenige in Längsrichtung der Schlitze 9 mm. Auf die Platte 5 wurden Stromkollektoren 18 in Form von Kontaktfingern durch Schweissen befestigt (Schweisspunkte 21). Die Kontaktfinger hatten eine Breite von 1,8 mm und eine Dicke von 0,15 mm. Ihre Länge war ihrer Stellung angepasst entsprechend steigendem Abstand zwischen Sauerstoffelektrode 3 und Platte 5 in Strömungsrichtung. Als Werkstoff für die Stromkollektoren 18 wurde die gleiche Legierung wie für Platte 5 verwendet. Die auf der Sauerstoffelektrode 3 aufliegenden Partien der Stromkollektoren 18 wurden zuvor nach dem Pastenverfahren mit einer 50 $\mu$m dicken Edelmetallauflage 23 (Kontaktpunkt) in Warzenform versehen. Im vorliegenden Fall handelte es sich um Pt als Edelmetall. Als Werkstoff für die Platte 5 und die Stromkollektoren 18 wurde eine Nikelbasis-Superlegierung mit dem Handelsnamen IN 625 und nachfolgenender Zusammensetzung verwendet:

|     |     |        |        |
| --- | --- | ------ | ------ |
| Cr  | =   | 21,5   | Gew.-% |
| Mo  | =   | 9,0    | Gew.-% |
| Nb  | =   | 3,6    | Gew.-% |
| Al  | =   | 0,2    | Gew.-% |
| Ti  | =   | 0,2    | Gew.-% |
| Fe  | =   | 2,5    | Gew.-% |
| Mn  | =   | 0,2    | Gew.-% |
| Si  | =   | 0,2    | Gew.-% |
| C   | =   | 0,05   | Gew.-% |
| Ni  | =   | Rest   |        |

Auf der Brennstoffseite wurde eine schräg verlaufende Platte 9 als Verteilelement vorgesehen. Die Platte mass 125 mm x 125 mm x 0,25 mm und war mit analogen Oeffnungen in Form von rechteckigen Schlitzen wie Platte 5 versehen. Als Werstoff für die Platte 9 und die Stromkollektoren 19 in Form von Kontaktfingern wurde die oxyddispersions- gehärtete Nickellegierung mit dem Handelsnamen TD-Nickel gewählt:

|        |     |      |        |
| ------ | --- | ---- | ------ |
| $ThO_2$ | =   | 2,0  | Gew.-% |
| Ni     | =   | Rest |        |

Alle übrigen Einzelheiten (Edelmetallauflage 23, Schweisspunkt 21) entsprachen denjenigen der Sauerstoffseite.

Ausführungsbeispiel 4:

Siehe Fig.5 !

Als Brennstoffzellen (1; 2; 3) dienten ebene quadratische Platten von 100 mm Seitenlänge. Die Trennplatte 4 wies eine Dicke von 0,6mm auf und bestand aus der Nickellegierung mit dem Handelsnamen Inconel X.

Auf der Sauerstoffseite und auf der Brennstoffseite waren gasdurchlässige Keile 13,14 und 16,17 mit offenen, kanal- artigen Poren aus dem Workstoff Aluminiumoxyd ($Al_2 O_3$) vorgesehen. Der schaumartige Werkstoff hatte eine progressive Dichte, die von 0,08 kg/dm$^3$ bis auf 0,15 kg/dm$^3$ anstieg. Die Porenweite (Porendurchmesser, Kanaldurchmesser) variierte von minimal 0,6 mm bis zu maximal 2,5 mm. Die Keile 13,14 (100 mm x 100 mm x 8 mm), 16 und 17 (100 mm x 100 mm x 5 mm) wurden geschliffen und an den Trennfugen zur Passung gebracht. Auf der Sauerstoffseite wurde während und nach der Fertigung ein Stromkollektor 20 in Form eines wellenförmigen Bandes eingelegt bzw.eingepasst. Das Band hatte eine Breite von 1,5 mm, eine Dicke von 0,15 mm, eine Wellenlänge von 8 mm und eine Höhe (doppelte Amplitude) von 8 mm. Der für den Stromkollektor 20 verwendete Werkstoff war eine oxyddispersionsgehärtete Nickelbasis-Superlegierung mit dem Handelsnamen MA 754 und folgender Zusammensetzung:

| Cr | = | 20 | Gew.-% |
|----|---|------|--------|
| Al | = | 0,3 | Gew.-% |
| Ti | = | 0,5 | Gew.-% |
| Fe | = | 1 | Gew.-% |
| C | = | 0,05 | Gew.-% |
| $Y_2 O_3$ | = | 0,6 | Gew.-% |
| Ni | = | Rest | |

Auf der Brennstoffseite wurde in analoger Weise ein Stromkollektor 22 in Form von schiefen Drahtwendeln eingepasst. Der Draht hatte einen Durchmesser von 0,12 mm; der Wendeldurchmesser betrug vor der Schiefstellung 6 mm, die Steigung 4 mm. Nach dem Zusammendrücken quer zur Längsachse war die Windungsebene gegenüber der Normalebene zur Längsachse um 30° geneigt. Die Höhe des Drahtwendels betrug daher noch ca. 5 mm. Als Werkstoff wurde für den Stromkollektor 22 die oxyddispersionsgehärtete chromhaltige Nickellegierung mit dem Handelsnamen TD-Ni Cr gewählt:

| Cr | = | 20 | Gew.-% |
|----|---|------|--------|
| $ThO_2$ | = | 2 | Gew.-% |
| Ni | = | Rest | |

Die Stromkollektoren 20 und 22 wurden auf der Trennplatte 4 durch Schweissen befestigt (Schweisspunkt 21)!

Ausführungsbeispiel 5:

Siehe Figuren 6 und 7!

Als Brennstoffzellen dienten ebene quadratische Platten von 100 mm Seitenlänge. Verteilelemente und Trennplatte bildeten eine monolithische Einheit und wurden aus einem einzigen rechteckförmigen Blech von 0,3 mm Dicke gefertigt. Das Blech mass im Grundriss 100 mm x 305 mm. Der monolithische Blechkörper 26 vor dem Falten bestand aus einer oxyddispersionsgehärteten Nickelbasis-Superlegierung ähnlich derjenigen mit dem Handelsnamen MA 754 mit folgender Zusammensetzung:

| Cr | = | 20,0 | Gew.-% |
|----|---|------|--------|
| Al | = | 0,3 | Gew.-% |
| Ti | = | 0,5 | Gew.-% |
| C | = | 0,08 | Gew.-% |
| $Y_2 O_3$ | = | 0,6 | Gew.-% |
| Ni | = | Rest | |

In den Blechkörper 26 wurden Schlitze und Lamellen gestanzt, die zu Kontaktfingern geformt wurden. Die Schlitze auf der Sauerstoffseite hatten eine Breite von 2 mm und eine von 2 bis 8 mm variierende Länge. Die Teilung in der Querrichtung der Lamellen 27 betrug 2,5 mm, diejenige in der Längsrichtung 10 mm. Die Lamellen 27 (Kontaktfinger) hatten eine Breite von 2 mm. Auf der Brennstoffseite hatten die Schlitze eine Breite von 1,6 mm und eine Länge, die von 1,6 mm bis 7 mm variierte. Die Teilung der Lamellen 28 in Querrichtung betrug 2,2 mm, diejenige in Länsrichtung 9 mm. Die Lamellen 28 (Kontaktfinger) hatten eine Breite von 1,6 mm. Sowohl auf der Sauerstoffseite wie auf der Brennstoffseite wurden die Köpfe der Kontaktfinger (vergl. Fig. 4!) mit einer 40 $\mu$m dicken Edelmetallauflage in Tropfenform aus einer Pt/Rh-Legierung mit 10 Gew.-% Rh versehen. Der Blechkörper 26 wurde längs der Faltzone 25 um ca. 175° einmal in der einen und ein weiteres Mal in der anderen Richtung umgebogen, derart, dass der minimale Biegeradius auf der jeweiligen Innenfläche ca. 0,5 mm betrug. Der fertige Blechkörper hatte die Z-ähnliche Form gemäss Bezugszeichen 24:Gegenstromprinzip!

Ausführungsbeispiel 6:

Siehe Figuren 6 und 8!

Als Brennstoffzellen (1; 2; 3) dienten ebene quadratische Platten von 120 mm Seitenlänge. Aehnlich Beispiel 5 bildeten auch hier Verteilelemente und Trennplatte eine monolithische Einheit und wurden aus einem einzigen Blech mit L-förmigem Grundriss und 0,35 mm Dicke hergestellt. Die als Verteilelemente und Stromkollektoren dienenden Partien hatten im Grundriss die Abmessungen 120 mm x 122 mm, die als Trennplatte dienende Partie solche von 120 mm x 120 mm. Als Werkstoff wurde die oxyddispersions-gehärtete Nickel/Chrom-Legierung mit dem Handelsnamen TD-Ni Cr gewählt.

$$Cr = 20 \quad Gew.-\%$$
$$Th\ O_2 = 2,0 \quad Gew.-\%$$
$$Ni = Rest$$

Analog Beispiel 5 wurden in den Blechkörper 26 Schlitze und Lamellen gestanzt, jedoch derart, dass die Längsrichtungen der Lamellen 28 der Brennstoffseite auf den Längsrichtungen der Lamellen 27 der Sauerstoffseite senkrecht standen. Abmessungen und Teilungen der Lamellen bzw. Kontaktfinger waren genau gleich wie unter Beispiel 5 angegeben. Das gleiche galt für die Edelmetallauflagen aus einer Pt/Rh-Legierung. Der Blechkörper 26 wurde nun längs der Faltzone 25 einmal in die eine und ein zweites Mal in die andere Richtung umgebogen. Dadurch wurde ein gefalteter Blechkörper ähnlich Bezugszeichen 24 in Fig.6 geformt, jedoch mit dem Unterschied, dass diese Partie oberhalb des Trennplattenteils (Stromkollektor 18, Sauerstoffseite) als Aufriss, die Partie unterhalb des Trennplattenteils (Stromkollektor 19, Brennstoffseite) als Seitenriss zu betrachten ist:Kreuzstromprinzip!

Die Erfindung ist nicht auf die Ausführungsbeispiele beschränkt.

Die Vorrichtung zur Erzielung einer möglichst gleichmässigen Temperaturverteilung auf der Oberfläche einer plattenförmigen keramischen Hochtemperatur-Brennstoffzelle (1; 2; 3) durch mindestens einseitige Steuerung der die Brennstoffzelle (1; 2; 3) auf beiden Seiten beaufschlagenden Ströme gasförmiger Medien ($O_2$; $CH_4$) weist mindestens auf einer Seite zwischen einer der Elektroden (2; 3) und der die Räume der gasförmigen Medien ($O_2$; $CH_4$) separierenden Trennplatte (4) ein Verteilelement (5, 9; 13, 14, 16, 17) auf, dergestalt, dass die gesamte Elektrodenoberfläche (2; 3) mit zugeführtem strömenden Medium ($O_2$; $CH_4$) möglichst gleicher Temperatur beaufschlagt ist. Das Verteilelement besteht vorzugsweise aus einer zwischen der Eintrittskante der Elektrodenseite (3) und der Austrittskante der Trennplattenseite (4) schräg verlaufend angeordneten, mit Oeffnungen (6, 10) versehenen Platte (5, 9), wobei die Grösse der Oeffnungen (6, 10), in Strömungsrichtung fortschreitend, derart ausgelegt ist, dass alle zur Kühlung der Elektrodenfläche (2; 3) herangezogenen Teilströme (7, 11) des gasförmigen Mediums ($O_2$; $CH_4$) möglichst gleichmässige Temperatur haben.

In einer anderen Ausführungsform besteht das Verteilelement aus zwei in der Diagonalebene zwischen Eintrittskante Elektrodenseite (3) und Austrittskante Trennplattenseite (4) zusammengefügten Keilen (13, 14; 16, 17) aus gasdurchlässigem Werkstoff, wobei die Porosität des Keils (13; 16) auf der Seite Eintrittskante Elektrode (3; 2), senkrecht zur Plattenebene gesehen, von der Elektrode (3; 2) zur Trennplatte (4) hin in zunehmender Weise und diejenige des Keils (14; 17) auf der Seite Austrittskante Trennplatte (4) in abnehmender Weise gestaltet ist, dergestalt, dass der Strömungswiderstand des gasförmigen Mediums ($O_2$; $CH_4$), in Strömungsrichtung gesehen, auf der Elektrodenseite (3; 2) zunächst einen hohen, dann einen niedrigen, auf der Trennplattenseite (4) zunächst einen niedrigen, dann einen hohen und in der Mittenebene zwischen Elektrode (3; 2) und Trennplatte (4) einen mittleren Wert hat.

In einer speziellen Ausführung bildet das Verteilelement (5; 9) und der für den Stromtransport zwischen benachbarten Brennstoffzellen senkrecht zur Plattenebene vorgesehene zugehörige Stromkollektor (18; 19) sowohl auf der Sauerstoffseite als auch auf der Brennstoffseite je ein konstruktives Ganzes. Der Stromkollektor (18; 19) besteht vorteilhafterweise aus beidseitig des Verteilelementes ( 5; 9) vorkragenden schief gestellten gebogenen oder wellenförmigen, aus der Platte des Verteilelementes (5; 9) herausgestanzten vollelastischen Lappen oder Lamellen.

In einer weiteren Ausführung bilden die Verteilelemente (5; 9) und die zugehörigen Stromkollektoren (18; 19) sowie die Trennplatte (4) sowohl auf der Sauerstoffseite als auch auf der Brennstoffseite ein einziges konstruktives Ganzes. Das aus Stromkollektor (18; 19) und Verteilelement (5; 9) bestehende konstruktive Ganze ist vorzugsweise aus einem Blech aus einer oxyddispersionsgehärteten Edelmetall-Legierung auf der Basis von Au und/oder einem Pt-Metall oder aus einer oxyddispersionsgehärteten Nickellegierung gefertigt.

## Patentansprüche

1. Vorrichtung zur Erzielung einer möglichst gleichmässigen Temperaturverteilung auf der Oberfläche einer plattenförmigen keramischen Hochtemperatur-Brennstoffzelle (1; 2; 3) durch mindestens einseitige Steuerung der die Brennstoffzelle (1; 2; 3) auf beiden Seiten beaufschlagenden Ströme gasförmiger Medien ($O_2$; $CH_4$), dadurch gekennzeichnet, dass mindestens auf einer Seite zwischen einer der Elektroden (2; 3) und der die Räume der gasförmigen Medien ($O_2$; $CH_4$) separierenden Trennplatte (4) ein Verteilelement (5, 9; 13, 14, 16, 17) angeordnet ist, dergestalt, dass die gesamte Elektrodenoberfläche (2; 3) mit zugeführtem strömenden Medium ($O_2$; $CH_4$) möglichst gleicher Temperatur beaufschlagt ist.

2. Vorrichtung nach Anspruch 1, dadurch gekennzeichnet, dass das Verteilelement aus einer zwischen der Eintrittskante der Elektrodenseite (3) und aus der Austrittskante der Trennplattenseite (4) schräg verlaufend angeordneten, mit Oeffnungen (6, 10) versehenen Platte (5, 9) besteht, wobei die Grösse der Oeffnungen (6, 10), in Strömungsrichtung fortschreitend, derart ausgelegt ist, dass alle zur Kühlung der Elektrodenfläche (2; 3) herangezogenen Teilströme (7, 11) des gasförmigen Mediums ($O_2$; $CH_4$) möglichst gleimässige Temperatur haben.

3. Vorrichtung nach Anspruch 1, dadurch gekennzeichnet, dass das Verteilelement aus zwei in der Diagonalebene zwischen Eintrittskante Elektrodenseite (3) und Austrittskante Trennplattenseite (4) zusammengefügten Keilen (13, 14; 16, 17) aus gasdurchlässigem Werkstoff besteht, wobei die Porosität des Keils (13; 16) auf der Seite Eintrittskante Elektrode (3; 2), senkrecht zur Plattenebene gesehen, von der Elektrode (3; 2) zur Trennplatte (4) hin in zunehmender Weise und diejenige des Keils (14; 17) auf der Seite Austrittskante Trennplatte (4) in abnehmender Weise gestaltet ist, dergestalt, dass der Strömungswiderstand des gasförmigen Mediums ($O_2$; $CH_4$), in Strömungsrichtung gesehen, auf der Elektrodenseite (3; 2) zunächst einen hohen, dann einen niedrigen, auf der Trennplattenseite (4) zunächst einen niedrigen, dann einen hohen und in der Mittenebene zwischen Elektrode (3; 2) und Trennplatte (4) einen mittleren Wert hat.

4. Vorrichtung nach Anspruch 1, dadurch gekennzeichnet, dass das Verteilelement (5; 9) und der für den Stromtransport zwischen benachbarten Brennstoffzellen senkrecht zur Plattenebene vorgesehene zugehörige Stromkollektor (18; 19) sowohl auf der Sauerstoffseite als auch auf der Brennstoffseite je ein konstruktives Ganzes bildet.

5. Vorrichtung nach Anspruch 4, dadurch gekennzeichnet, dass der Stromkollektor (18; 19) aus beidseitig des Verteilelementes (5; 9) vorkragenden schief gestellten gebogenen oder wellenförmigen, aus der Platte des Verteilelements (5; 9) herausgestanzten vollelastischen Lappen oder Lamellen besteht.

6. Vorrichtung nach Anspruch 1, dadurch gekennzeichnet, dass die Verteilelemente (5; 9) und die zugehörigen Stromkollektoren (18; 19) sowie die Trennplatte (4) sowohl auf der Sauerstoffseite als auch auf der Brennstoffseite ein einziges konstruktives Ganzes bilden.

7. Vorrichtung nach einem der Ansprüche 4, 5 oder 6, dadurch gekennzeichnet, dass das aus Stromkollektor (18; 19) und Verteilelement (5; 9) bestehende konstruktive Ganze aus einem Blech aus einer oxyddispersionsgehärteten Edelmetall-Legierung auf der Basis von Au und/oder einem Pt-Metall oder aus einer oxyddispersionsgehärteten Nickellegierung gefertigt ist.

# FIG.1

# FIG.2

# FIG.3

# FIG.4

# FIG.5

# FIG.6

FIG.7

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 10, Nr. 317 (E-449)[2373], 28. Oktober 1986; & JP-A-61 128 470 (HITACHI LTD) 16-06-1986 * Zusammenfassung * | 1 | H 01 M 8/24 H 01 M 8/02 |
| A | PATENT ABSTRACTS OF JAPAN, Band 12, Nr. 277 (E-640)[3124], 30. Juli 1988; & JP-A-63 58 769 (HITACHI LTD) 14-03-1988 * Zusammenfassung * | 1 | |
| A | PATENT ABSTRACTS OF JAPAN, Band 13, Nr. 38 (E-709)[3386], 27. Januar 1989; & JP-A-63 236 265 (HITACHI LTD) 03-10-1988 * Zusammenfassung * | 1 | |
| A | PATENT ABSTRACTS OF JAPAN, Band 11, Nr. 292 (E-543)[2739], 19. September 1987; & JP-A-62 90 871 (HITACHI LTD) 25-04-1987 | | |
| A | EP-A-0 067 423 (ENERGY RESEARCH CORP.) * Figuren 1,2; Seite 8, Zeile 29 - Seite 9, Zeile 10 * | 1 | |
| A | PATENT ABSTRACTS OF JAPAN, Band 12, Nr. 420 (E-679)[3267], 8. November 1988; & JP-A-63 158 754 (MITSUBISHI ELECTRIC CORP.) 01-07-1988 * Zusammenfassung * | 1 | RECHERCHIERTE SACHGEBIETE (Int. Cl.5) H 01 M |
| A | PATENT ABSTRACTS OF JAPAN, Band 14, Nr. 117 (E-898)[4060], 5. März 1990; & JP-A-1 313 855 (NKK CORP.) 19-12-1989 | | |

−/−

Der vorliegende Recherchenbericht wurde für alle Patentansprüche erstellt

| Recherchenort | Abschlußdatum der Recherche | Prüfer |
|---|---|---|
| Den Haag | 15 April 91 | D'HONDT J.W. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-1 011 353 (GENERAL DYNAMICS)<br>— — — | | |
| A | WO-A-8 606 762 (M. HSU)<br>— — — | | |
| A | PATENT ABSTRACTS OF JAPAN, Band 11, Nr. 220 (E-524), 16. Juli 1987;<br>& JP-A³62 040 168 (MITSUBISHI ELECTRIC CORP.) 21-02-1987<br>* Zusammenfassung *<br>— — — | 1 | |
| A | PATENT ABSTRACTS OF JAPAN, Band 14, Nr. 12 (E-871)[3955], 11. Januar 1990;<br>& JP-A-1 258 365 (HITACHI LTD) 16-10-1989<br>* Zusammenfassung *<br>— — — — | 1 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| Den Haag | 15 April 91 | D'HONDT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
&: Mitglied der gleichen Patentfamilie, übereinstimmendes Dokument